**Europäisches Patentamt**

**European Patent Office**

**Office européen des brevets**

(19)

(11) Veröffentlichungsnummer: **0 236 570**
**B1**

(12)
# EUROPÄISCHE PATENTSCHRIFT

(45) Veröffentlichungstag der Patentschrift:
30.05.90

(51) Int. Cl.⁵: **B60K 17/22, B60K 17/34**

(21) Anmeldenummer: **86117393.8**

(22) Anmeldetag: **13.12.86**

(54) Antrieb für Nutzfahrzeuge.

(30) Priorität: **13.03.86 DE 3608305**

(43) Veröffentlichungstag der Anmeldung:
**16.09.87 Patentblatt 87/38**

(45) Bekanntmachung des Hinweises auf die Patenterteilung:
**30.05.90 Patentblatt 90/22**

(84) Benannte Vertragsstaaten:
**AT BE DE ES FR GB GR IT NL SE**

(56) Entgegenhaltungen:
**BE-A- 434 122**
**DE-A- 2 747 786**
**FR-A- 1 489 031**
**GB-A- 1 102 901**
**US-A- 3 827 520**
**US-E- 2 941 611**

**Alfred Preukschat: "Fahrwerktechnik: Antriebsarten" 1. Auflage 1985, Bild 3.68**

(73) Patentinhaber: **MAN Nutzfahrzeuge Aktiengesellschaft, Dachauer Strasse 667 Postfach 50 06 20, D-8000 München 50(DE)**

(72) Erfinder: **Rieck, Gerhard, Oderstrasse 8, D-7910 Neu-Ulm(DE)**
Erfinder: **Schubert, Klaus, Dr., Packenreiterstrasse 21, D-8000 München 60(DE)**

## Beschreibung

Die Erfindung bezieht sich auf einen Antrieb für Nutzfahrzeuge mit einem Antriebsmotor und einem fest mit ihm verbundenen Schaltgetriebe, einem Hinterachsgetriebe, in einem speziellen Fall auch ein Vorderachsgetriebe, und gegebenenfalls einem Retarder, wobei der gesamte Antriebsstrang in Unterflurbauweise angeordnet ist.

Es sind Unterflurantriebe für Nutzfahrzeuge allgemein bekannt, jedoch nur für Fahrzeuge mit einem gewissen Mindestachsabstand, so daß diese vorteilhafte Anwendung des Unterflurantriebes nur die konventionellen Transportmittel, nämlich Lkw mit Ladebrücken, gegebenenfalls mit Anhänger betrifft, währenddessen bisher bei Lkw's mit kurzem Achsabstand und hier insbesondere bei Sattelschleppern, die mehr und mehr den Markt durchdringen, die besonders vorteilhafte Antriebsform wegen der zu kurzen Achsabstände nicht integrierbar war.

Aus der DE-A 2 747 786 ist die Anordnung eines Getriebestranges bekannt, bei dem der Getriebeabtrieb eines ersten Schaltgetriebes gegensinnig dem Motorabtrieb angeordnet ist. Der Getriebeabtrieb des Schaltgetriebes ist mit dem Antrieb eines zweiten Schaltgetriebes verbunden. Es handelt sich hierbei um keine spezielle Anordnung für Unterflurbauweise. Eine andere Vorveröffentlichung «Fahrwerkstechnik: Antriebsarten» von Preukschat, Vogelbuch-Verlag Würzburg, zeigt den Antriebsstrang eines Rennwagens, bei dem das Schaltgetriebe nicht am Motor, sondern am Vorderachsgetriebe angebracht ist.

Der Erfindung liegt die Aufgabe zugrunde, eine günstige Anordnung des Antriebsstranges für Fahrzeuge mit kurzem Achsabstand, insbesondere Sattelschleppern zu finden.

Dies wird erfindungsgemäß dadurch gelöst, daß der sich zwischen Vorder- und Hinterachse befindliche Antriebsmotor mit einem unmittelbar vor der Vorderachse angeordneten Schaltgetriebe verbunden ist, dessen Abtrieb gegensinnig dem Motorabtrieb vorgesehen ist oder alternativ mittels eines separaten Umlenkgetriebes über Wellen mit dem Hinterachsgetriebe wahlweise auch mit einem Vorderachsgetriebe oder sowohl mit Hinterachsgetriebe und Vorderachsgetriebe verbunden ist. Die Vorteile einer solchen Anordnung sind vielfältig. So wird eine optimale Gewichtsverteilung bei niedriger Schwerpunktlage des Fahrzeuges erzielt. Dadurch wird einmal das Fahrverhalten besser, zum anderen wird die Kippsicherheit erhöht. Insbesondere auch für das Fahrerhaus ergeben sich mannigfaltige Vorteile mit neuen Gestaltungsperspektiven. Durch Wegfall der Motoranordnung unter dem Fahrerhaus auch bei Sattelschleppern wird für diese Fahrzeuggattung eine Geräuschreduzierung im Fahrerhaus erzielt. Durch Wegfall der Motorhaube innerhalb der Kabine ergibt sich auch ein größerer Innenraum. Weiterhin können Fahrerhäuser oder Komponenten von ihnen aus dem Standardprogramm verwendet werden, was einen wirtschaftlichen Aspekt von großer Bedeutung darstellt. Damit verbunden ist auch die Möglichkeit, niedrige Einstiege zu realisieren, was besonders für Verteilerfahrzeuge wichtig ist. Eine Kapselung des Motorraumes ist wirkungsvoll und mit einfachen Mitteln zu erreichen, da keine einfedernde Achse den gekapselten Raum durchdringt.

Nach einer besonders einfachen Ausführungsart der Erfindung ist das Umlenkgetriebe direkt am Schaltgetriebe angeflanscht. Solcherart ergibt sich eine kostengünstige Ausführungsart.

Nach einer anderen Ausführungsart ist das Umlenkgetriebe im Abstand zum Schaltgetriebe angeordnet und beide sind mittels Gelenkwelle miteinander verbunden. Dadurch läßt sich ein auch für die normale Frontlenkerbauart standardisiertes Getriebe original verwenden. In beiden Ausführungsarten ist ein Abtrieb zu einem Retarder oder auch zu einer eventuell angetriebenen Vorderachse grundsätzlich möglich.

Nach einem Merkmal der Erfindung ist eine vom Abtrieb des Umlenkgetriebes abgehende Welle in einer fest mit dem Antriebsmotor verbundenen Halterung gelagert und über eine Gelenkwelle mit dem Hinterachsgetriebe verbunden. Hier wird der vorhandene Motor mit seinem stabilen Gehäuse und seinen vielfältigen Möglichkeiten vorhandener Befestigungsstellen für das Anbringen der Halterungen genutzt.

Weitere Vorteile und Merkmale der Erfindung sind den Ansprüchen, der Beschreibung und den Zeichnungen zu entnehmen.

Die Erfindung ist in drei Ausführungsbeispielen dargestellt:

Es zeigen:

Fig.1 einen Lastkraftwagen mit Unterflurantrieb in der Seitenansicht

Fig.2 einen Lastkraftwagen mit Unterflurantrieb in der Draufsicht

Fig.3 eine Variante des Lastkraftwagens mit Unterflurantrieb in der Seitenansicht

Fig.4 eine Variante des Lastkraftwagens mit Unterflurantrieb in der Draufsicht

Fig.5 eine weitere Variante des Lastkraftwagens mit Unterflurantrieb in der Seitenansicht

Fig.6 eine weitere Variante des Lastkraftwagens mit Unterflurantrieb in der Draufsicht

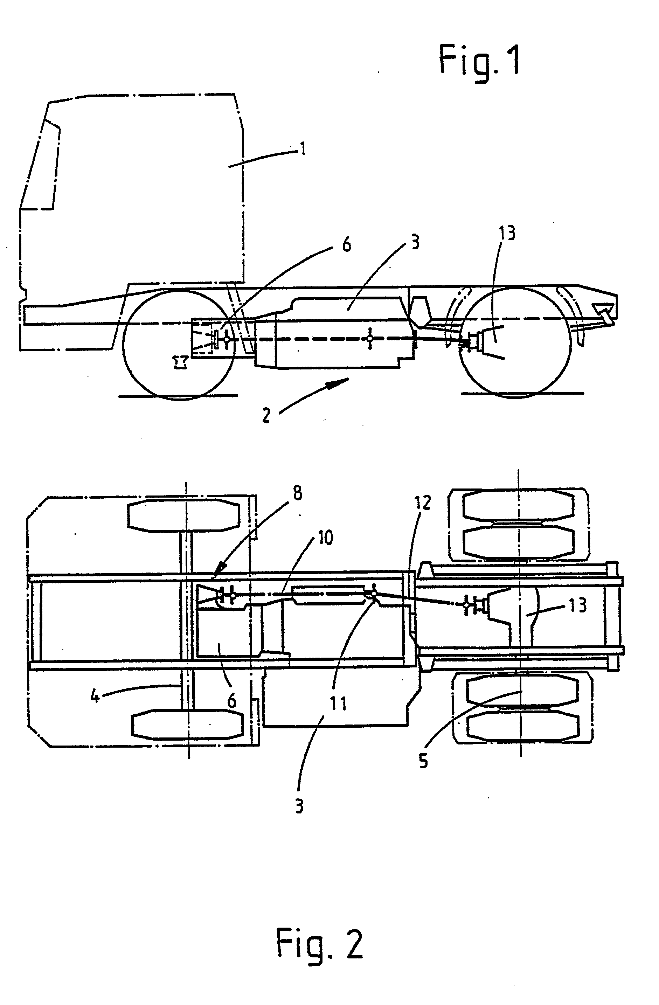

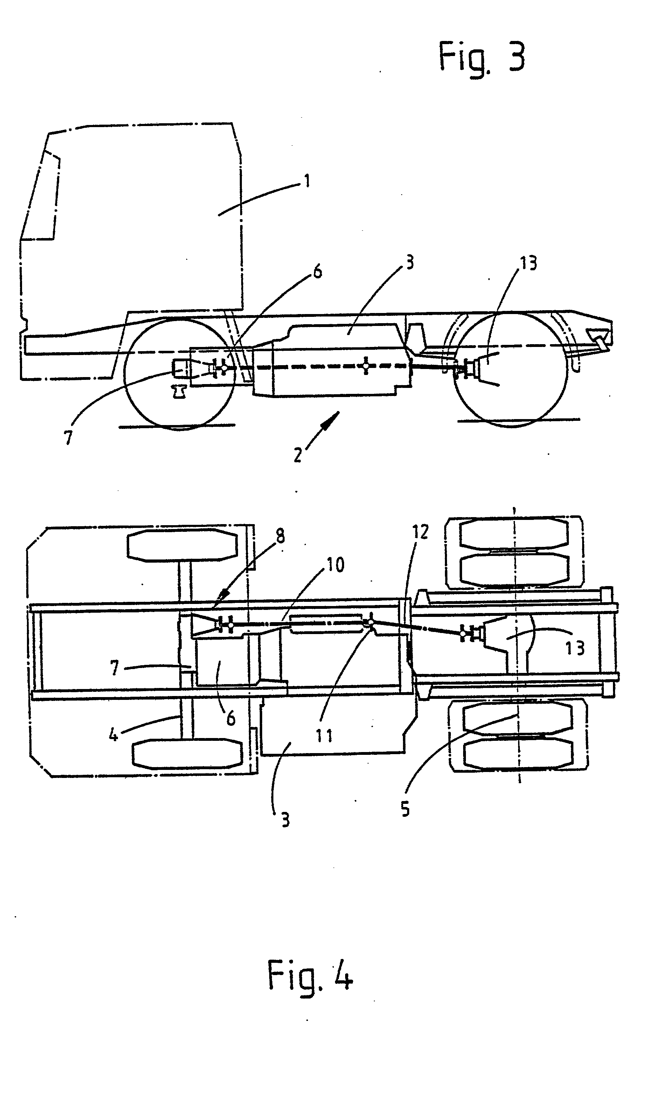

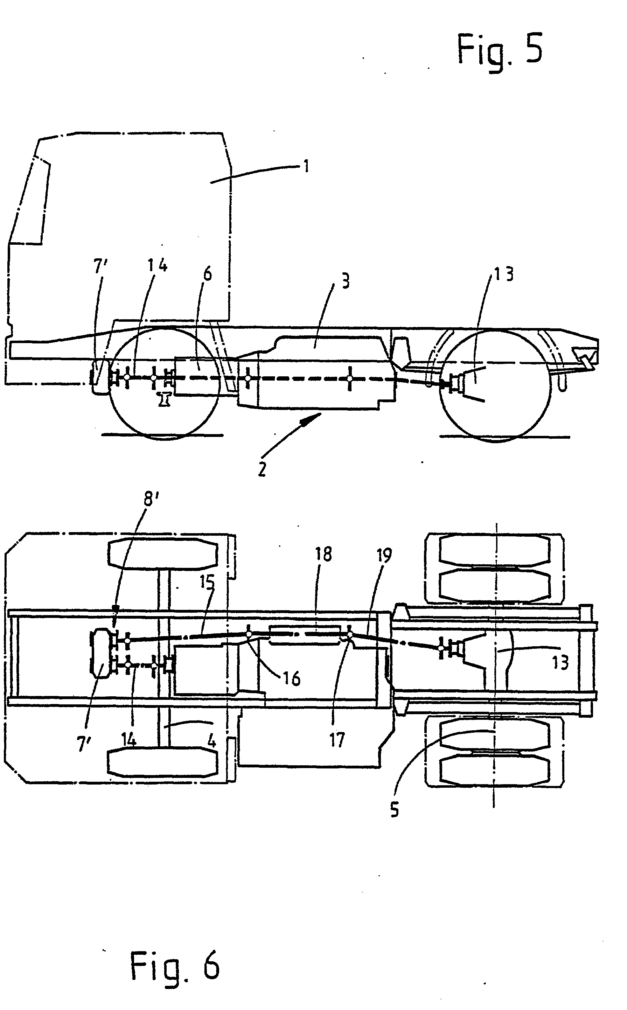

Fig.1 zeigt einen Lastkraftwagen, vorzugsweise in der Ausbildung als Sattelschlepper, mit einem Fahrerhaus (1) und einem Antriebsstrang (2), wobei der Antriebsmotor (3) zwischen der Vorderachse (4) und der Hinterachse (5) in Unterflurbauweise angeordnet und der Motor mit einem Schaltgetriebe (6) verbunden ist, das sich in Richtung Vorderachse (4) erstreckt. Das Schaltgetriebe (6) weist nach Fig.2 einen einstückig mit ihm verbundenen Abtrieb (8) auf, der gegensinnig dem Motorabtrieb angeordnet ist. Der Abtrieb ist mit einer starren Welle (10), die in einer am Motor befestigten Halterung (11) gelagert ist verbunden, während anderenends an der Welle (10) eine Gelenkwelle (12) angeschlossen ist, die das Hinterachsgetriebe (13) antreibt. Die Figuren 3 und 4 zeigen die erfindungsgemäße Einrichtung mit einem separaten, direkt am Getriebe (6) angeflanschten Umlenkgetriebe (Vorgelegegetriebe) (7), dessen Abtrieb (8) in gleicher Weise wie auch in den Fig. 1 und 2 gezeigt mit dem Hinterachsgetriebe (13) verbunden sind.

Eine weitere Variante ist in den Figuren 5 und 6 dargestellt. Im Unterschied zu den Figuren 3 und 4 ist hier das Umlenkgetriebe (7') im Abstand zum Schaltgetriebe (6) angeordnet und mit diesem über Gelenkwelle (14) verbunden. Der Abtrieb (8') liegt auch in dieser Ausführung gegensinnig dem Motorabtrieb. Am Abtrieb ist eine Gelenkwelle (15) angeschlossen, die ihrerseits mit in am Motor (3) befestigten Halterungen (16 und 17) gelagerten, starren Welle (18) verbunden ist. Die Welle (18) ist mit einer Gelenkwelle (19) gekoppelt, die das Hinterachsgetriebe (13) antreibt. An das Umlenkgetriebe (7, 7') können natürlich noch andere angetriebene Elemente wie Retarder bzw. Abtrieb zur Vorderachse angeschlossen werden.

## Patentansprüche

1. Antrieb für Nutzfahrzeuge mit einem Antriebsmotor und einem fest mit ihm verbundenen Schaltgetriebe, einem Hinterachsgetriebe, in einem speziellen Fall auch Vorderachsgetriebe und gegebenenfalls einem Retarder, wobei der gesamte Antriebsstrang in Unterflurbauweise angeordnet ist, dadurch gekennzeichnet, daß der sich zwischen Vorderachse (4) und Hinterachse (5) befindliche Antriebsmotor (3) mit einem unmittelbar vor der Vorderachse (4) angeordneten Schaltgetriebe (6) verbunden ist, dessen Abtrieb (8) gegensinnig dem Motorabtrieb vorgesehen ist oder alternativ mittels eines separaten Umlenkgetriebes (7, 7') über Wellen (10, 12, 15, 18, 19) mit dem Hinterachsgetriebe (13) wahlweise auch mit einem Vorderachsgetriebe oder sowohl mit Hinterachsgetriebe und Vorderachsgetriebe verbunden ist.

2. Antrieb nach Anspruch 1, dadurch gekennzeichnet, daß am Schaltgetriebe (3) ein integrierter Getriebeabtrieb (8) vorgesehen ist, der über eine Welle (10) und eine Gelenkwelle (12) mit dem Hinterachsgetriebe (13) verbunden ist.

3. Antrieb nach Anspruch 1, dadurch gekennzeichnet, daß das Umlenkgetriebe (7) in Form eines Vorgelegegetriebes direkt am Schaltgetriebe (6) angeflanscht ist.

4. Antrieb nach Anspruch 1, dadurch gekennzeichnet, daß das Umlenkgetriebe (7') in Abstand zum Schaltgetriebe (3) angeordnet ist und beide mittels einer Gelenkwelle (14) miteinander verbunden sind.

5. Antrieb nach Anspruch 3, dadurch gekennzeichnet, daß eine vom Abtrieb (8) des Vorgelegegetriebes (7) abgehende Welle (10) in einer fest mit dem Antriebsmotor (3) verbundenen Halterung (11) gelagert ist und über eine Gelenkwelle (12) mit dem Hinterachsgetriebe (13) verbunden ist.

6. Antrieb nach dem Anspruch 4, dadurch gekennzeichnet, daß der Abtrieb (8') des Umlenkgetriebes (7') über eine Gelenkwelle (15) mit einer starren Welle (18), die in fest mit dem Antriebsmotor (3) verbundenen Halterungen (16, 17) gelagert ist, verbunden ist und die starre Welle (18) anderenends mit einer Gelenkwelle (19) gekoppelt ist, die mit dem Hinterachsgetriebe (13) verbunden ist.

7. Antrieb nach einem oder mehreren der Ansprüche 1 bis 6, dadurch gekennzeichnet, daß das Schaltgetriebe (6) oder Umlenkgetriebe (7, 7') mit einem Retarder verbunden ist.

## Claims

1. A drive for service vehicles having an engine and a gear-shift transmission securely connected thereto, a rear-axle gear, and in a special case also a front-axle gear and where appropriate a retarder, the entire driving train being arranged in an underfloor design, characterized in that the engine (3) arranged between the front axle (4) and the rear axle (5) is connected to a gear-shift transmission (6) arranged immediately before the front axle (4), the drive (8) of the said gear-shift transmission (6) being provided in the opposite direction to the engine drive or alternetively being connected by means of a separate reverse gear (7, 7') by way of shafts (10, 12, 15, 18, 19) to the rear-axle gear (13) end optionally also to a front-axle gear or to both the rear-axle gear end the front-axle gear.

2. A drive according to claim 1, characterized in that an integrated transmission drive (8) connected to the rear-axle gear (13) by way of a shaft (10) and a cardan shaft (12) is provided on the gear-shift transmission (3) [sic].

3. A drive according to claim 1, characterized in that the reverse gear (7) is flange-mounted in the form of a back gear directly on the gear-shift transmission (6).

4. A drive according to claim 1, characterized in that the reverse gear (7) is arranged at a distance from the gear-shift transmission (3) [sic], and both are connected together by means of a cardan shaft (14).

5. A drive according to claim 3, characterized in that a shaft (10) taken off from the drive (8) of the back gear (7) is mounted in a support securely connected to the engine (3) and is connected to the rear-axle gear (13) by way of a cardan shaft (12).

6. A drive according to claim 4, characterized in that the output (8') of the reverse gear (7') is connected by way of a cardan shaft (15) to a rigid shaft (18) mounted in supports (16, 17) securely connected to the engine (3), and the rigid shaft (18) is connected at the other end to a cardan shaft (19) connected to the rear-axle gear (13),

7. A drive according to one or more of claims 1 to 6, characterized in that the gear-shift transmission (6) or reverse gear (7, 7') is connected to a retarder.

## Revendications

1. Transmission pour véhicule utilitaire comportant un moteur auquel est reliée solidairement une boîte de vitesses, une transmission d'essieu arrière et dans un cas particulier également une transmission d'essieu avant et le cas échéant un retardateur, l'ensemble de la ligne de transmission étant réalisé sous châssis, transmission caractérisée en ce que le moteur (3) se trouve entre l'essieu avant (4) et l'essieu arrière (5) avec une boîte de vitesses (6) prévue directement devant l'essieu avant (4), boîte dont la sortie (8) est en sens opposé de la sortie du moteur ou en variante, par l'intermédiaire d'une transmission de renvoi (7, 7') distincte en étant reliée par des arbres (10, 12, 15, 18, 19) à la transmission de l'essieu arrière (13) et le cas échéant avec la transmission de l'essieu avant ou à la fois avec la transmission de l'essieu arrière et avec la transmission de l'essieu avant.

2. Transmission selon la revendication 1, caractérisée par une sortie de boîte (8), intégrée à la boîte de vitesses (3), sortie qui est reliée à la transmission de l'essieu arrière (13) par un arbre (10) et un arbre articulé (12).

3. Transmission selon la revendication 1, caractérisée en ce que la transmission de renvoi (7) est bridée directement sur la boîte de vitesses (6) sous la forme d'une transmission intermédiaire.

4. Transmission selon la revendication 1, caractérisée en ce que la transmission de renvoi (7') est prévue à une certaine distance de la boîte de vitesses (3) et les deux sont reliées par l'intermédiaire d'un arbre articulé (14).

5. Transmission selon la revendication 3, caractérisée par arbre (10) partant de la sortie (8) de la transmission intermédiaire (7), cet arbre étant monté dans un support (11) relié rigidement au moteur (3) et cet arbre est relié à la transmission de l'essieu arrière (13) par un arbre articulé (12).

6. Transmission selon la revendication 4, caractérisée en ce que la sortie (8') de la transmission de renvoi (7) est reliée par un arbre articulé (15) à un arbre rigide (18) qui est monté dans des supports (16, 17) reliés solidairement au moteur (3), et l'autre extrémité de l'arbre rigide (18) est couplée sur un arbre articulé (19) lui-même relié à la transmission de l'essieu arrière (13).

7. Transmission selon l'une ou plusieurs des revendications 1 à 6, caractérisée en ce que la boîte de vitesses (6) sous la transmission de renvoi (7, 7') est reliée à un retardateur.

EP 0 236 570 B1

Fig. 1

Fig. 2

Fig. 3

Fig. 4

Fig. 5

Fig. 6